# EUROPEAN PATENT SPECIFICATION

(11) **EP 1 705 264 B1**
(45) Date of publication and mention of the grant of the patent: **08.03.2017**
(21) Application number: 06006168.6
(22) Date of filing: 24.03.2006
(51) Int. Cl.: C23C 22/74, F16J 15/08, F16J 15/12, C09J 5/02, B32B 15/06, B32B 15/08, B32B 15/18, B32B 15/20, B32B 25/14

(54) **Steel sheet coated with chemical conversion film and process for producing the same**
Stahlband mit chemischer Konversionsbeschichtung und Verfahren zur deren Herstellung
Tôle d'acier revêtu d'une couche de conversion chimique et son procédé de réalisation

(30) Priority: 25.03.2005 JP 2005089519
(43) Date of publication of application: 27.09.2006
(73) Proprietor: NICHIAS CORPORATION, Chuo-ku Tokyo 104-8555 (JP)
(72) Inventor: Saito, Hiroshi, Ikoma-gun Nara (JP); Ishikawa, Kenichiro, Ikoma-gun Nara (JP)
(74) Representative: Grünecker Patent- und Rechtsanwälte PartG mbB

(56) References cited:
- EP-A- 0 320 826
- EP-A- 1 298 179
- EP-A- 1 398 547
- WO-A-03/106169
- JP-A- H0 858 015
- US-A- 3 562 011
- DATABASE WPI Section Ch, Week 199647 Derwent Publications Ltd., London, GB; Class A21, AN 1996-471753 XP002388331 -& JP 08 238712 A (NKK CORP) 17 September 1996 (1996-09-17)

## Description

### FIELD OF THE INVENTION

The present invention relates to a process for producing a steel sheet coated.

### BACKGROUND OF THE INVENTION

Gaskets and washers comprising a rubber-coated steel sheet obtained by bonding a rubber layer to a steel sheet are in extensive use as gaskets and washers to be applied to, e.g., vehicle engines.

Also known are ones obtained by depositing a chromate film on a steel sheet for more tenacious rubber layer retention and bonding a rubber layer onto the chromate film (see, for example, patent document 1).

Patent Document 1: JP-A-3-227622 (Claims; pp. 3-4)

The gaskets and washers in which a rubber layer has been bonded onto a chromate film have an advantage that adhesion decreases little even when the gaskets and washers are heated or come into contact with a nonfreezing solution, namely, these gaskets and washers are excellent in heat resistance and resistance to nonfreezing solutions. However, as a result of the recent growing environmental consciousness, chromate treatments tend to be avoided because the treatments have a drawback that the hexavalent chromium contained in the chromate-treating solution exerts a direct adverse influence on the human body. In addition, waste liquids containing hexavalent chromium should be subjected to a special treatment as provided for in the water pollution control law. Another drawback is that wastes of chromate-treated stainless-steel materials cannot be recycled. There also is a high possibility that chromium might be extracted from the chromate film upon contact with nonfreezing solutions or oils.

Furthermore, when a chromate-treating solution is applied to a steel sheet, the acid ingredient contained in the chromate-treating solution causes the steel sheet to dissolve in the solution and thus generate an eluted metal. The eluted metal gradually precipitates in the chromate-treating solution with the continuation of production. As a result, the chromate-treating solution changes in composition, making it impossible to form the desired chromate film. The interval at which the chromate-treating solution is replaced by a fresh one tends to become shorter.

As described above, the gaskets and washers which have been chromate-treated have a serious problem concerning the environment and safety during use. In the production thereof also, there is a problem that the pot life of the chromate-treating solution is short. EP-A-1398547 relates to a gasket material improved in durability. JP-08058015 describes a stainless steel panel having a heat-resistance film.

### SUMMARY OF THE INVENTION

Accordingly, an object of the invention is to provide a chemical-conversion-film-coated steel sheet which is equal or superior to chromate-treated steel sheets in heat resistance and resistance to nonfreezing solutions and poses no problem concerning the environment and which is suitable for use as a gasket material or a washer material.

Other objects and effects of the invention will become apparent from the following description.

The invention has been solved on the basis of claims 1 and 2. As a result, it has been found that the object described above is accomplished by applying a treating liquid containing silica particles and an acid ingredient to a steel sheet and forming a coating film comprising a reaction product of a metal which has been released from the steel sheet through elution, the silica, and the acid ingredient.

Namely, the invention provides the following in order to accomplish the object.
(1) A process for producing a steel sheet coated with a chemical conversion film, comprising:
   coating either one side or both sides of a steel sheet with a treating liquid consisting of silica particles and an acid ingredient: and
   drying the applied treating liquid by heating to thereby form a coating film comprising a reaction product of the silica, the acid ingredient and one or more metals in the steel sheet,
   wherein the content of the acid ingredient in the treating liquid is 20 to 80% by weight,
   the acid ingredient comprises at least one member selected from the group consisting of acetic acid, formic acid, sulfuric acid, nitric acid, hydrofluoric acid, and organic acids, or a mixture of the at least one member and a phosphoric acid.
(2) A process for producing a steel sheet coated with a chemical conversion film, comprising:
   coating either one side or both sides of a steel sheet with a treating liquid consisting of silica particles and an acid ingredient: and
   drying the applied treating liquid by heating to thereby form a coating film comprising a reaction product of the silica, the acid ingredient and one or more metals in the steel sheet,
   wherein the content of the acid ingredient in the treating liquid is 35 to 80% by weight,
   the acid ingredient comprises at least one member selected from fluorocomplexes.

The steel sheet coated with a chemical conversion film and the material for gasket use and material for washer use each comprising the chemical conversion film-coated steel sheet have excellent resistance to nonfreezing solutions and excellent heat resistance without necessitating a chromate treatment which is harmful to the human body. These materials hence are an extremely effective measure against social problems concerning environmental preservation, suitability for recycling, and are effective also in practical use. Furthermore, in producing these materials, the material that is eluted out in the treating liquid is the metal(s) in the steel plate being treated per se. Because of this, even when the metal concentration in the treating liquid increases, this exerts little influence on coating film formation and the treating liquid retains a prolonged pot life.

### DETAILED DESCRIPTION OF THE INVENTION

The invention is explained below. In the invention, a treating liquid comprising silica particles and an acid ingredient is applied to a steel sheet and dried with heating to form a chemical conversion film comprising a reaction product of the silica, the acid ingredient and one or more metals eluted out from the steel sheet.

Examples of the acid ingredient to be used in the invention include phosphoric acids such as orthophosphoric acid, polyphosphoric acid, and phosphoric anhydride, acetic acid, formic acid, sulfuric acid, nitric acid, hydrofluoric acid, fluorocomplexes such as fluorotitanic acid and fluorozirconic acid, and organic acids. Such an acid ingredient is incorporated in the treating liquid in a proportion of 20 to 80% by weight based on the treating liquid, when the acid ingredient comprises at least one member selected from the group consisting of acetic acid, formic acid, sulfuric acid, nitric acid, hydrofluoric acid, and organic acids, or a mixture of the at least one member and a phosphoric acid, or the acid ingredient is incorporated in the treating liquid in a proportion of 35 to 80% by weight based on the treating liquid, when the acid ingredient comprises at least one member selected from fluorocomplexes. The content thereof is more preferably 35 to 65% by weight. In case where the content of the acid ingredient exceeds 80% by weight, the acid ingredient amount is too large as compared with the metal which is eluted out from the steel sheet and, hence, there is a possibility that the formation of a chemical conversion film might be too insufficient to obtain the desired heat resistance and resistance to nonfreezing solutions. On the other hand, acid ingredient contents lower than 20% by weight also result in a possibility that the formation of a chemical conversion film might be too insufficient to obtain the desired heat resistance and resistance to nonfreezing solutions.

Basically, one such acid suffices for the acid ingredient. However, not only one acid may be used alone but also a mixture of two or more different acids can be used as the acid ingredient. This is because use of such a mixture increases the efficiency of reaction between the acid ingredient and one or more metals in the steel sheet and thereby accelerates the formation of a chemical conversion film.

The silica particles to be used in the invention preferably are ones having excellent dispersibility in the treating liquid. Examples of such silicas include colloidal silica and vapor-phase-process silica. The colloidal silica is commercially available under the trade names of, e.g., Snowtex C, Snowtex N, Snowtex S, Snowtex UP, Snowtex PS-M, Snowtex PS-L, Snowtex 20, Snowtex 30, and Snowtex 40 (all manufactured by Nissan Chemical Industries, Ltd.). The vapor-phase-process silica is commercially available under the trade names of, e.g., Aerosil 50, Aerosil 130, Aerosil 200, Aerosil 300, Aerosil 380, Aerosil TT 600, Aerosil MOX 80, and Aerosil MOX 170 (all manufactured by Nippon Aerosil Co., Ltd.). Such a silica is incorporated preferably in such a proportion that the content of the silica in the treating liquid is 10 to 60% by weight. The silica content in the film is more preferably 30 to 50% by weight.

As the kind of the steel sheet in the invention a stainless-steel sheet (ferritic, martensitic, or austenic stainless steel)

The formation of a chemical conversion film on a steel sheet can be carried out, for example, by applying the treating liquid as described above, which comprises silica particles and an acid ingredient, on either one or both sides of the steel sheet with a known coating device, e.g., a roll coater, and then drying the thus applied treating-liquid film at a temperature of 150 to 250°C. During this drying with heating, reactions occur among one or more metals which have been eluted out from the steel sheet and the acid ingredient and silica to yield a metal compound, which constitutes a coating film. The coating amount of the coating film suitable for practical use is 50 to 900 mg/m².

In the case where a chemical conversion film is to be formed on both sides of a steel sheet, a method of immersing the steel sheet in the treating liquid may be used in order to heighten productivity. In this method, the one or more metals which have been eluted out from the steel sheet come into the treating liquid and the metal concentration in the treating liquid hence increases gradually. However, the influence of this increase in metal concentration on the chemical conversion film to be formed is far less than in the chromate treatments heretofore in use, because the same metals in the steel sheet being treated are eluted out. Consequently, the treating liquid has a prolonged pot life.

The chemical conversion film-coated steel sheet of the invention thus obtained is excellent in heat resistance and resistance to nonfreezing solutions. This coated steel sheet is hence suitable for use as gaskets and washers for automotive engines, in particular, for the radiator pipings.

The production of a gasket or washer from the chemical conversion film-coated steel sheet can be carried out, for example, by punching a piece of a given shape (e.g., a ring shape) out of the coated steel sheet, and bonding a rubber layer onto the coated surface. Although the rubber constituting the rubber layer may be a known one, it is preferably a rubber excellent in heat resistance and chemical resistance, such as an NBR, fluororubber, silicone rubber, acrylonitrile/butadiene rubber, HNBR, or EPDM. The formation of the rubber layer can be carried out, for example, by applying either a rubber solution prepared by dissolving a rubber material in an appropriate solvent or a rubber latex in a thickness of 20 to 130 µm with a skimmer coater, or roll coater, and subjecting the applied solution or latex film to vulcanization at 150 to 250°C to attain bonding.

A primer layer (e.g., an adhesive comprising a nitrile rubber compound and a phenolic resin) may be interposed between the rubber layer and the chemical conversion film according to need.

The adhesion improvement by a chromate film is thought to be attained by the following mechanism.

First, after the application of a chromate-treating solution onto a steel sheet, the dichromic acid etches the steel sheet surface and a polar ingredient is introduced onto the steel sheet surface. This polar ingredient tenaciously adheres to a chromate film through secondary bonds, whereby adhesion between the steel sheet and the chromate film is enhanced. On the other hand, with respect to the interface between the chromate film and a rubber layer, the dichromic acid which has been dried by heating and polar groups of a silica ingredient tenaciously combine with polar groups of the rubber layer to enhance adhesion. As a result, the adhesion between the steel sheet and the rubber layer is enhanced and is less apt to decrease even when the rubber-coated steel sheet is heated or comes into contact with a nonfreezing solution.

Also in the present invention, it is presumed that the acid ingredient, e.g., a phosphoric acid, in place of dichromic acid functions to enhance the adhesion between the steel sheet and the rubber layer by the same mechanism.

### EXAMPLES

The invention will be illustrated in greater detail by reference to the following Examples and Comparative Examples.

### Production of Samples

Each of the treating liquids prepared by mixing ingredients according to the formulations shown in Table 1 was applied to both sides of an aluminum steel sheet with a roll coater. The treating-liquid film applied was dried at 180°C to form a coating film. The amount of each coating film is shown in Table 2. Subsequently, an adhesive constituted of a nitrile rubber compound and a phenolic resin was applied to the coating film and heat-treated to form a primer layer on the coating film. A sample which did not have this primer layer was also produced (Example 5). A solution prepared by dissolving a nitrile rubber in a solvent was applied thereon (i.e., on the primer layer or on the coating film) with a roll coater. The applied solution was vulcanized to attain bonding at 180°C for 10 minutes to form a rubber layer. Thus, samples were produced.

### 1. Resistance to Nonfreezing Solution

Each sample produced above was immersed half in a coolant for motorcar radiators (genuine long-life coolant for Toyota) while keeping the sample perpendicular to the liquid surface (half immersion), and was allowed to stand in this state for 500 hours at a liquid temperature of 120°C. Thereafter, the sample was taken out of the coolant, and the unimmersed part and the immersed part were subjected to a scratch drawing test. A crosscut tape peeling test was further conducted. The test methods used and evaluation criteria are as follows.

### 1.1 Scratch Drawing Test

A scratch drawing tester having the constitution as provided for in JIS-K6894 was used to draw a spiral on the sample surface so as to make 25 turns with a radius of 4.5 mm. The state of the surface was evaluated based on the following criteria. The results obtained are shown in the columns "Part unimmersed in half immersion" and "Part immersed in half immersion" under "Resistance to nonfreezing solution" in Table 2.

### Evaluation criteria:

- 5:: rubber layer remains completely
- 4:: only a part of rubber layer is missing
- 3:: about half of rubber layer is missing
- 2:: rubber layer remains slightly
- 1:: rubber layer is completely missing

### 1.2 Crosscut Tape Peeling Test

The test was conducted in the following manner in accordance with JIS-K5400.
(1) The sample surface is crosshatch-wise incised at an interval of 2 mm to make 100 squares.
(2) A pressure-sensitive adhesive tape is applied to the squares and rubbed with a rubber eraser to completely adhere the pressure-sensitive adhesive tape.
(3) At 1 to 2 minutes after the tape adhesion, one end of the pressure-sensitive adhesive tape is held and stripped off in a moment in a direction perpendicular to the sample surface.
(4) The sample surface from which the tape has been stripped is examined and the number of squares remaining is counted.

The results obtained are shown in the column "Whole immersion" under "Resistance to nonfreezing solution" in Table 2. In the column, "100/100", for example, indicates that any one square was not peeled off upon the tape stripping, and "50/100" indicates that a half, i.e., 50 squares, was peeled off.

### 2. Adhesion after Heating

Each sample produced was allowed to stand with heating at 200°C for 500 hours and then subjected to the same crosscut tape peeling test as described above. The results obtained are shown in the column "Heat resistance" in Table 2.

**Table 1**

| | Silica | | Acid ingredient | |
|---|---|---|---|---|
| | Kind | Content (weight%) | Kind | Content (weight%) |
| Reference Example 1 | colloidal silica | 40 | phosphoric acid | 60 |
| Example 2 | colloidal silica | 40 | fluorotitanic acid/ phosphoric acid | 40/20 |
| Example 3 | vapor-phase-process silica | 30 | fluorozirconic acid | 70 |
| Example 4 | vapor-phase-process silica | 40 | tartaric acid (organic acid)/ phosphoric acid | 20/40 |
| Example 5 | vapor-phase-process silica | 30 | fluorozirconic acid | 70 |
| Comparative Example 1 | vapor-phase-process silica | 10 | phosphoric acid | 90 |
| Comparative Example 2 | vapor-phase-process silica | 90 | phosphoric acid | 10 |
| Comparative Example 3 | vapor-phase-process silica | 40 | hydrochloric acid | 60 |
| Comparative Example 4 | chromate solution | | | |

**Table 2**

| | Amount of coating film (mg/m²) | Resistance to nonfreezing solution | | | Heat resistance |
|---|---|---|---|---|---|
| | | Whole immersion | Part unimmersed in half immersion | Part immersed in half immersion | |
| Ref. Ex. 1 | 500 | 100/100 | 5 | 5 | 100/100 |
| Ex. 2 | 300 | 100/100 | 5 | 5 | 100/100 |
| Ex. 3 | 100 | 100/100 | 5 | 5 | 100/100 |
| Ex. 4 | 400 | 100/100 | 5 | 5 | 100/100 |
| Ex. 5 | 700 | 100/100 | 5 | 5 | 100/100 |
| Comp. Ex. 1 | 100 | 0/100 | 2 | 1 | 20/100 |
| Comp. Ex. 2 | 200 | 60/100 | 1 | 2 | 30/100 |
| Comp. Ex. 3 | 400 | 30/100 | 2 | 2 | 10/100 |
| Comp. Ex. 4 | Cr:80 | 100/100 | 5 | 5 | 100/100 |

Table 2 shows the following. The samples of Examples 1 to 5, which had a chemical conversion film constituted of a product of reactions among silica, an acid ingredient, and a metal eluted out from the steel sheet and satisfied the invention, each gave satisfactory evaluation results equal to those of the sample of Comparative Example 4, which had undergone a chromate treatment. In contrast, the sample of Comparative Example 1, in which the acid ingredient content was higher than the upper limit in the preferred range, the sample of Comparative Example 2, in which the acid ingredient content was lower than the lower limit in the preferred range, and the sample of Comparative Example 3, in which a preferred acid ingredient was not used, showed deteriorated performances.

## Claims

1. A process for producing a steel sheet coated with a chemical conversion film, comprising:
coating either one side or both sides of a steel sheet with a treating liquid consisting of silica particles and an acid ingredient; and
drying the applied treating liquid by heating to thereby form a coating film comprising a reaction product of the silica, the acid ingredient and one or more metals in the steel sheet,
wherein the content of the acid ingredient in the treating liquid is 20 to 80% by weight,
the acid ingredient comprises at least one member selected from the group consisting of acetic acid, formic acid, sulfuric acid, nitric acid, hydrofluoric acid, and organic acids, or a mixture of the at least one member and a phosphoric acid.

2. A process for producing a steel sheet coated with a chemical conversion film, comprising:
coating either one side or both sides of a steel sheet with a treating liquid consisting of silica particles and an acid ingredient; and
drying the applied treating liquid by heating to thereby form a coating film comprising a reaction product of the silica, the acid ingredient and one or more metals in the steel sheet,
wherein the content of the acid ingredient in the treating liquid is 35 to 80% by weight, and
the acid ingredient comprises at least one member selected from fluorocomplexes.

## Patentansprüche

1. Verfahren zum Herstellen eines Stahlbands, beschichtet mit einem chemischen Konversionsfilm, umfassend:
Beschichten von entweder einer Seite oder beiden Seiten eines Stahlbands mit einer Behandlungsflüssigkeit bestehend aus Siliziumdioxidpartikeln und einem Säurebestandteil; und
Trocknen der Behandlungsflüssigkeit durch Heizen, um dadurch einen Beschichtungsfilm zu bilden, umfassend ein Reaktionsprodukt aus dem Siliziumdioxid, dem Säurebestandteil und einem oder mehreren Metallen in dem Stahlband,
wobei der Gehalt des Säurebestandteils in der Behandlungsflüssigkeit 20 bis 80 Gew.-% beträgt,
der Säurebestandteil mindestens ein Mitglied ausgewählt aus der Gruppe bestehend aus Essigsäure, Ameisensäure, Schwefelsäure, Salpetersäure, Fluorwasserstoffsäure und organischen Säuren umfasst, oder ein Gemisch aus dem mindestens einem Mitglied und einer Phosphorsäure.

2. Verfahren zum Herstellen eines Stahlbands, beschichtet mit einem chemischen Konversionsfilm, umfassend:
Beschichten von entweder einer Seite oder beiden Seiten eines Stahlbands mit einer Behandlungsflüssigkeit bestehend aus Siliziumdioxidpartikeln und einem Säurebestandteil; und
Trocknen der Behandlungsflüssigkeit durch Heizen, um dadurch einen Beschichtungsfilm zu bilden, umfassend ein Reaktionsprodukt aus dem Siliziumdioxid, dem Säurebestandteil und einem oder mehreren Metallen in dem Stahlband,
wobei der Gehalt des Säurebestandteils in der Behandlungsflüssigkeit 35 bis 80 Gew.-% beträgt und
der Säurebestandteil mindestens ein Mitglied ausgewählt aus Fluorkomplexen umfasst.

## Revendications

1. Procédé de production d'une tôle d'acier revêtue d'un feuil de conversion chimique, comprenant les étapes consistant à :
recouvrir soit un soit les deux côtés d'une tôle d'acier avec un liquide de traitement composé de particules de silice et d'un ingrédient acide ; et
sécher, par chauffage, le liquide de traitement appliqué afin de former ainsi un feuil de revêtement comprenant un produit de réaction de la silice, de l'ingrédient acide et d'un ou plusieurs métaux présents dans la tôle d'acier,
où la proportion d'ingrédient acide dans le liquide de traitement est de 20 à 80 % en poids,
l'ingrédient acide comprend au moins un des éléments choisis parmi le groupe comprenant l'acide acétique, l'acide formique, l'acide sulfurique, l'acide nitrique, l'acide fluorhydrique et les acides organiques ou un mélange de l'au moins un de ces membres et d'un acide phosphorique.

2. Procédé de production d'une tôle d'acier revêtue d'un feuil de conversion chimique, comprenant les étapes consistant à :
recouvrir soit un soit les deux côtés d'une tôle d'acier avec un liquide de traitement composé de particules de silice et d'un ingrédient acide ; et
sécher, par chauffage, le liquide de traitement appliqué afin de former ainsi un feuil de revêtement comprenant un produit de réaction de la silice, de l'ingrédient acide et d'un ou plusieurs métaux présents dans la tôle d'acier,
où la proportion d'ingrédient acide dans le liquide de traitement est de 35 à 80 % en poids,
l'ingrédient acide comprend au moins un éléments choisi parmi des fluorocomplexes.
